Europäisches Patentamt

European Patent Office

Office européen des brevets

(11) Veröffentlichungsnummer: **0 411 337 A1**

# (12) EUROPÄISCHE PATENTANMELDUNG

(21) Anmeldenummer: 90112838.9

(22) Anmeldetag: 05.07.90

(51) Int. Cl.⁵: **F16F 9/34**, F16F 9/44

(30) Priorität: 02.08.89 DE 3925520

(43) Veröffentlichungstag der Anmeldung:
06.02.91 Patentblatt 91/06

(84) Benannte Vertragsstaaten:
BE DE ES FR GB IT NL SE

(71) Anmelder: Hermann Hemscheidt
Maschinenfabrik GmbH & Co.Co.
Bornberg 97-103
D-5600 Wuppertal 1(DE)

(72) Erfinder: Runkel,Walter,Dr.Dipl.-Ing.
Mendelssohnweg 30
D-5600 Wuppertal 2(DE)

(74) Vertreter: Patentanwälte Dr. Solf & Zapfapf
Schlossbleiche 20 Postfach 13 01 13
D-5600 Wuppertal 1(DE)

(54) Dämpfungsventil mit verbesserter Dämpfungseinstellung.

(57) Die Erfindung betrifft ein Dämpfungsventil (1) für insbesondere hydraulische Medien in Dämpfungssystemen, wie Stoß- und Schwingungsdämpfungs-Systemen und dergleichen, mit mindestens einem zur Dämpfungseinstellung mit einem Ventilelement ausgestatteten Drosselkanal (38). Das Ventilelement deckt den Drosselkanal (38) an seiner Austrittsmündung (40) für das Medium zumindest teilweise ab und ist einendig als eingespanntes Blattfederelement (42) ausgebildet, wobei die Dämpfungseinstellung durch Variation der freien Blattlänge (1) des Blattfederelementes (42) erfolgt.

FIG. 2

EP 0 411 337 A1

# DÄMPFUNGSVENTIL MIT VERBESSERTER DÄMPFUNGSEINSTELLUNG

Die vorliegende Erfindung betrifft ein Dämpfungsventil für insbesondere hydraulische Medien in Dämpfersystemen, wie Stoß- und Schwingungsdämpfungs-Systemen und dergleichen, mit mindestens einem zur Dämpfungseinstellung mit einem Ventilelement ausgestatteten Drosselkanal.

Aus der DE-OS 36 13 677 ist ein Stoß- und Schwingungsdämpfungssystem bekannt. Dabei ist in einem Zylinder einer hydropneumatischen Kolben-Zylinder-Einheit ein Kolben mit einer hohlzylindrischen Kolbenstange geführt. Innerhalb der Kolbenstange teilt ein freibeweglicher Trennkolben einen Ausgleichsraum für Hydraulikmedium von einem mit kompressiblem Medium gefüllten Gasspeicher. Der Kolben besitzt eine aus mehreren Drosselkanälen bestehende Passage, über die bei der Kolbenbewegung aus einer Zylinderkammer Hydraulikmedium in den Ausgleichsraum oder umgekehrt strömt. Dabei bewirkt das in den Ausgleichsraum strömende Medium eine Komprimierung des Gasspeichers über den frei beweglichen Trennkolben und damit eine Federwirkung. In der Passage des Kolbens zwischen der Zylinderkammer und dem Ausgleichsraum ist hierbei eine Dämpfungsventil-Anordnung vorgesehen, über die eine Dämpfung der Federung bzw. der Strömung des Hydraulikmediums erreicht wird. Diese Dämpfungsventil-Anordnung besteht aus zwei einzelnen, gattungsgemäßen Dämpfungsventilen, wobei das eine Dämpfungsventil die Einfederungsströmung und das andere Dämpfungsventil die Ausfederungsströmung dämpft. Bei dieser bekannten Anordnung ist jedoch von entscheidendem Nachteil, daß die Dämpfungswirkung nach einer anfänglichen Einstellung bei der Herstellung der Kolben-Zylinder-Einheit fest vorgegeben, d.h. nicht mehr veränderbar ist. Dadurch ist aber auch eine "dynamische Verstellbarkeit" während des Betriebes des jeweiligen Dämpfers nicht möglich.

Der Erfindung liegt daher die Aufgabe zugrunde, ein gattungsgemäßes Dämpfungsventil zu schaffen, welches mit konstruktiv einfachen und damit preiswerten Mitteln eine leichte und wirkungsvolle sowie vorzugsweise auch "dynamische" Verstellmöglichkeit der Dämpfung mit einer guten Verstellcharakteristik gewährleistet.

Erfindungsgemäß wird dies dadurch erreicht, daß das Ventilelement als den Drosselkanal an seiner Austrittsmündung für das Medium zumindest teilweise abdeckendes, einendig eingespanntes Blattfederelement ausgebildet ist, wobei die Dämpfungseinstellung durch Variation der freien Blattlänge des Blattfederelementes erfolgt.

Die Dämpfungswirkung wird somit erfindungsgemäß dadurch erreicht, daß das den Drosselkanal durchströmende Dämpfungsmedium auf das sich über die Kanalmündung erstreckende, lamellenartige Blattfederelement trifft und dieses mit einer Öffnungskraft beaufschlagt, wodurch sich das Blattfederelement in Abhängigkeit von seiner gerade eingestellten, freien Blattlänge und damit auch in Abhängigkeit von seiner momentanen Federkraft mehr oder weniger weit in Öffnungsrichtung verbiegt und so eine mehr oder weniger große Strömungs- bzw. Drosselöffnung freigibt. Dabei ist erfindungsgemäß auch eine Einstellung möglich, bei der die freie Blattlänge - bezogen auf den Drosselkanal - gleich Null ist, so daß das Blattfederelement den Drosselkanal ganz verschließt. Erfindungsgemäß ist somit eine insbesondere stufenlose Veränderung der Dämpfung von einer minimalen, von der maximalen Blattlänge sowie den konstanten Federdaten des Blattfederelementes bestimmten Dämpfung bis zu einer maximalen Dämpfung mit Strömung - gleich Null (Blockierung) möglich. Die Dämpfungsverstellung läßt sich vorteilhafterweise mit besonders einfachen Mitteln realisieren. Hierzu wird auf die Ausführungsbeispiele in der nachfolgenden Figurenbeschreibung verwiesen.

Weitere vorteilhafte Ausgestaltungsmerkmale der Erfindung sind in den Unteransprüchen enthalten.

Anhand mehrerer Ausführungsbeispiele soll im folgenden die Erfindung näher erläutert werden. Dabei zeigen:

Fig. 1 einen Axialschnitt durch eine hydropneumatische Kolben-Zylinder-Einheit mit einer erfindungsgemäßen Dämpfungsventil-Anordnung,

Fig. 2 eine Schnittdarstellung einer stark vereinfachten Ausführung eines erfindungsgemäßen Dämpfungsventils zur Erläuterung der prinzipiellen Wirkungsweise,

Fig. 3 eine Ausschnittvergrößerung des Bereichs X der Dämpfungsventil-Anordnung in Fig. 1,

Fig. 4 einen Querschnitt entlang der Schnittlinie A-A in Fig. 3,

Fig. 5 einen Querschnitt entlang der Schnittlinie B-B in Fig. 3

Fig. 6 einen Axialschnitt durch eine alternative Ausführungsform einer erfindungsgemäßen Dämpfungsventil-Anordnung in einer Darstellung analog zu Fig. 3,

Fig. 7 einen Querschnitt längs der Linie A-A in Fig. 6,

Fig. 8 einen Querschnitt längs der Linie B-B in Fig. 6 und

Fig. 9 eine weitere Alternative einer erfindungsgemäßen Dämpfungsventil-Anordnung im Axialschnitt.

In den verschiedenen Zeichnungsfiguren sind gleiche Teile stets mit den gleichen Bezugsziffern bezeichnet.

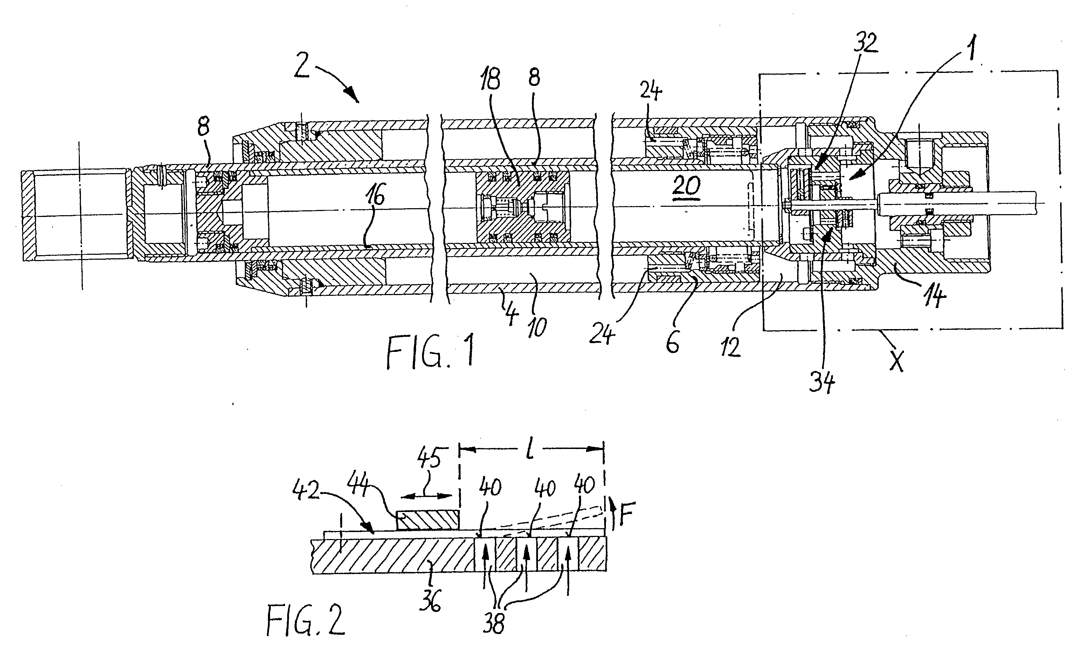

In dem in Fig. 1 dargestellten Ausführungsbeispiel ist eine erfindungsgemäße Dämpfungsventil-Anordnung 1 innerhalb einer hydropneumatischen Kolben-Zylinder-Einheit 2 angeordnet. Es liegt jedoch im Rahmen der Erfindung, das erfindungsgemäße Dämpfungsventil als separates, über Leitungen mit einem beliebigen Dämpfersystem, beispielsweise auch mit Lenkungsdämpfern und dergleichen, verbundenes Bauteil auszubilden. Im dargestellten Beispiel besteht die Kolben-Zylinder-Einheit 2 aus einem Zylinder 4 und einem in diesem geführten Kolben 6, der mit einer Kolbenstange 8 verbunden ist. Die Kolbenstange 8 ragt einendig abgedichtet aus dem Zylinder 4 heraus. Der Kolben 6 teilt innerhalb des Zylinders 4 zwei mit einem hydraulischen Medium gefüllte Kammern 10 und 12 ab. Die Kolbenstange 8 ist hohlzylindrisch und der Kolben 6 ringförmig ausgebildet. Innerhalb des Zylinders 4 ist dabei ein an einem dem offenen Ende des Zylinders 4 abgekehrten Kopfteil 14 befestigtes Innenrohr 16 koaxial angeordnet, welches sich mit geringem Spiel durch den ringförmigen Kolben 6 hindurch und in die hohlzylindrische Kolbenstange 8 hinein erstreckt. Somit umschließt der Kolben 6 das Innenrohr 16 in einem zwischen diesem und dem Zylinder 4 gebildeten Zylinder-Ringraum mit geringem Umfangsspiel. Aufgrund dieser Ausgestaltung sind die über den Kolben 6 getrennten Kammern 10 und 12 als Ringkammern ausgebildet. Die derart ausgebildete Kolben-Zylinder-Einheit 2 besitzt eine sehr hohe Stabilität zur Aufnahme extrem hoher Querkräfte, da die hohlzylindrische Kolbenstange 8 vorteilhafterweise mit ihrer Innenwandung über den gesamten Hub des ringförmigen Kolbens 6 auf dem Außenmantel des Innenrohrs 16 geführt ist.

Innerhalb des Innenrohrs 16 ist nun weiterhin ein Trennkolben 18 freibeweglich, d.h. schwimmend, geführt. Dieser Trennkolben 18 trennt einen auf seiner dem Kopfteil 14 zugekehrten Seite angeordneten, mit dem hydraulischen Medium gefüllten Ausgleichsraum 20 von einem auf der anderen Seite des Trennkolbens 18 liegenden, als pneumatische Feder wirkenden Gasspeicher 22. Innerhalb dieses Gasspeichers ist ein elastisch kompressibles Medium, beispielsweise Luft, angeordnet, und zwar gegebenenfalls unter einem eine Vorspannung bewirkenden Überdruck.

Der Kolben 6 besitzt mindestens einen die Kammern 10 und 12 verbindenden Strömungskanal 24 sowie vorzugsweise eine die Strömung zwischen den Kammern 10 und 12 dämpfende bzw. drosselnde Dämpfungsventil-Anordnung 26. Diese Dämpfungsventil-Anordnung 26 des Kolbens 6 ist jedoch nicht Gegenstand der vorliegenden Erfindung, weshalb ihre Ausgestaltung hier auch nicht näher beschrieben wird.

Die erfindungsgemäße Dämpfungsventil-Anordnung 1 ist nun vorzugsweise am Übergang zwischen der Zylinderkammer 12 und dem Ausgleichsraum 20 im Bereich des Kopfteils 14 angeordnet und besitzt in allen Ausführungsbeispielen eine erste, mit der Zylinderkammer 12 verbundene Ventilkammer 28 sowie eine zweite, mit dem Ausgleichsraum 20 verbundene bzw. in den Ausgleichsraum 20 unmittelbar übergehende Ventilkammer 30. Die Dämpfungsventil-Anordnung 1 besteht hierbei vorzugsweise aus zwei einzelnen Dämpfungsventilen, und zwar einem Einfederungs-Dämpfungsventil 32 zum Dämpfen der Einfederungs-Strömung von der Zylinderkammer 12 in den Ausgleichsraum 20 sowie einem Ausfederungs-Dämpfungsventil 34 zum Dämpfen der Ausfederungs-Strömung aus dem Ausgleichsraum 20 in die Zylinderkammer 12. Die beiden Ventilkammern 28 und 30 sind über eine Trennwand 36 voneinander getrennt, wobei sich durch diese Trennwand 36 hindurch für jedes Dämpfungsventil 32 bzw. 34 mindestens ein Drosselkanal 38 erstreckt. Die Drosselkanäle 38 sind dabei zur Dämpfungseinstellung jeweils mit einem Ventilelement ausgestattet.

Wie in Fig. 2 vereinfacht dargestellt ist, ist nun erfindungsgemäß das Ventilelement als den Drosselkanal 38, im dargestellten Beispiel jeden von mehreren Drosselkanälen 38, an seiner Austrittsmündung 40 für das hydraulische Medium abdeckendes, einendig eingespanntes Blattfederelement 42 ausgebildet. Dabei erfolgt erfindungsgemäß die Dämpfungseinstellung durch Variation der freien Blattlänge bzw. der Einspannlänge 1 des Blattfederelementes 42. Hierzu ist zweckmäßigerweise jeweils ein längs des Blattfederelementes 42 über dieses hinweg derart beweglich geführtes Andruckelement 44 vorgesehen (siehe den Doppelpfeil 45 in Fig. 2), daß das Blattfederelement 42 zwischen der Trennwand 36 und dem Andruckelement 44 mit der variablen Länge 1 eingespannt ist. Hierdurch ändert sich erfindungsgemäß auch die Federkraft F des Blattfederelementes 42, die zum Öffnen der Strömungskanäle 38 durch Verbiegen des Blattfederelementes 42 in eine in Fig. 2 gestrichelt eingezeichnete Lage von dem durch die Strömungskanäle 38 strömenden Medium aufzubringen ist. Es läßt sich hierdurch sehr feinfühlig und insbesondere stufenlos die Dämpfungs- bzw. Drosselwirkung durch Variation des offenen Strömungsquerschnittes verändern. Dabei läßt sich das Andruckelement 44 vorzugsweise auch über die Drosselkanäle 38 bewegen, so daß diese gänzlich verschlossen werden können.

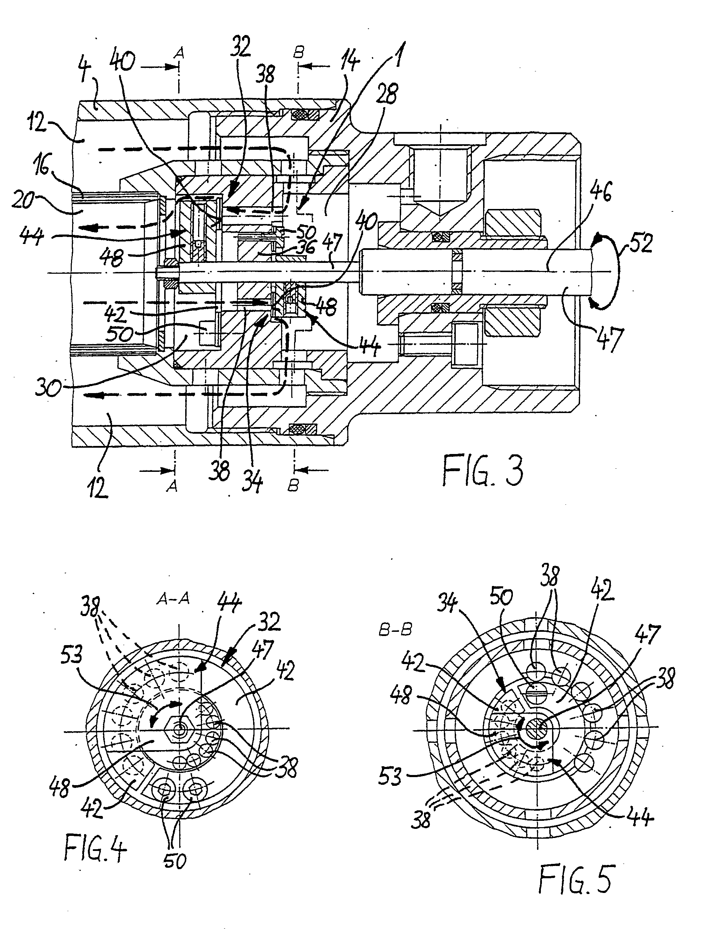

Im folgenden sollen die Ausführungsbeispiele der Fig. 3 bis 9 genauer erläutert werden.

Bei der Ausführung nach Fig. 3 bis 5 sind die Dämpfungsventile 32, 34 der erfindungsgemäßen Dämpfungsventil-Anordnung 1 mit Axialströmung ausgebildet. Hierzu ist die Trennwand 36 zwischen der ersten Ventilkammer 28 und der zweiten Ventilkammer 30 senkrecht zur Längsachse 46 der Kolbenzylindereinheit 2 angeordnet, und für jedes Dämpfungsventil 32, 34 erstrecken sich mehrere Drosselkanäle 38 axial durch die Trennwand 36. Die Drosselkanäle 38 sind jeweils auf einem zur Längsachse 46 konzentrischen Kreis verteilt angeordnet, wobei die Drosselkanäle 38 des einen Dämpfungsventils 32 auf einem äußeren Kreis und die Drosselkanäle 38 des anderen Dämpfungsventils 34 auf einem inneren Kreis (oder aber umgekehrt) liegen (siehe insbesondere Fig. 4 und 5). Die Drosselkanäle 38 der Dämpfungsventile 32, 34 sind jeweils von dem bei dieser Ausführung als Teil einer ebenen Kreisringscheibe oder als vollständige, jedoch radial geschlitzte Kreisringscheibe ausgebildeten Blattfederelement 42 abgedeckt, und zwar jeweils auf der Seite, auf der das hydraulische Medium nach Durchströmen der Drosselkanäle 38 aus diesen austritt, d.h. auf der Seite der Austrittsmündungen 40. Durch den Kopfteil 14 der Kolbenzylindereinheit 2 erstreckt sich nach außen abgedichtet eine zentrische, axiale Welle 47, die das Andruckelement 44 für jedes Dämpfungsventil 32, 34 trägt, wobei hier jedes Andruckelement 44 als radial angeordnetes, zusammen mit der Welle verdrehbares bzw. verschwenkbares Andruckstück 48 ausgebildet ist. Gemäß Fig. 4 und 5 überdeckt hierbei jedes Andruckstück 48 einen Winkelbereich von etwa 90°. Wie weiterhin in den Fig. 4 und 5 gut zu erkennen ist, sind die ringscheibenförmigen Blattfederelemente 42 jeweils einendig über Schrauben 50 an der Trennwand 36 befestigt, während ihr freier, federelastischer Bereich axial zwischen der Trennwand 36 und dem jeweiligen Andruckstück 48 eingespannt angeordnet ist. Durch Drehung der Welle 47 mittels ihres nach außen geführten Betätigungsendes in Doppelpfeilrichtung 52 (Fig. 3) erfolgt somit ein gemeinsames Verschwenken beider Andruckstücke 48 in Doppelpfeilrichtung 53 (Fig. 4 und 5), was die erfindungsgemäße Variation der Einspannlänge 1 und damit eine Dämpfungsverstellung zur Folge hat. Weiterhin ist in Fig. 3 zu erkennen, daß das erfindungsgemäße Blattfederelement 42 auch mehrschichtig aus mindestens zwei parallel aufeinanderliegenden Einzelblattfedern bestehen kann. Dies führt bei gleicher Dicke zu einer "weicheren" Feder, da die Einzelblattfedern sich bei der Verbiegungsbewegung gegeneinander verschieben können. Im übrigen sind in Fig. 3 auch noch gestrichelte Pfeile eingezeichnet, die einerseits die Strömungsrichtung beim Einfedern über das Einfederungs-Dämpfungsventil 32 und andererseits die Strömungsrichtung beim Ausfedern über das Ausfederungs-Dämpfungsventil 34 veranschaulichen sollen.

In einer in den Fig. 3 bis 5 nicht dargestellten, vorteilhaften Weiterbildung der Erfindung ist zwischen jedem Andruckelement 44 und dem zugeordneten Blattfederelement 42 ein Druckausgleich dahingehend geschaffen, daß der Druck des hydraulischen Mediums auf beiden axialen Seiten der Andruckelemente 44 jeweils gleich ist. Dies kann mit Vorteil dadurch realisiert werden, daß jedes Andruckelement 44 auf seiner dem Blattfederelement 42 zugekehrten Seite Abstandselemente, wie insbesondere radiale Auflagestege, aufweist, die das Blattfederelement 42 zusammen mit der Trennwand 36 einspannen. Das hydraulische Medium kann dann zwischen die Abstandselemente, das Blattfederelement 42 und das Andruckelement 44 eindringen. Hierdurch wird erfindungsgemäß erreicht, daß sich die Dämpfung über Betätigen der Andruckelemente 44 auch unter Betriebsbedingungen, d.h. dynamisch, sehr leichtgängig verstellen läßt.

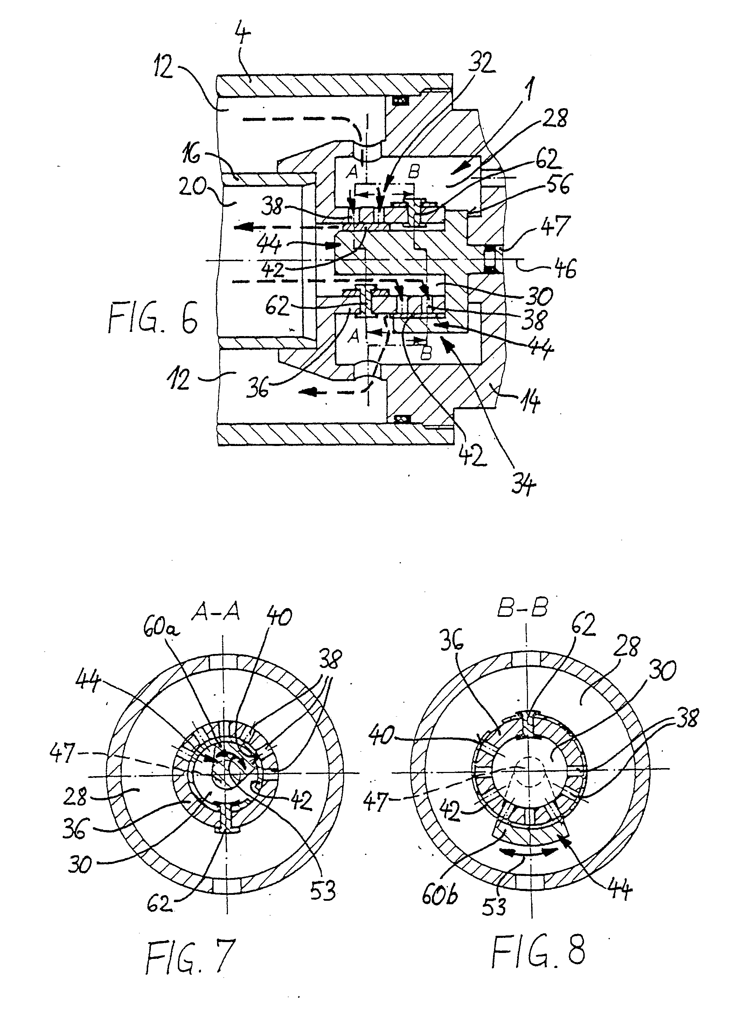

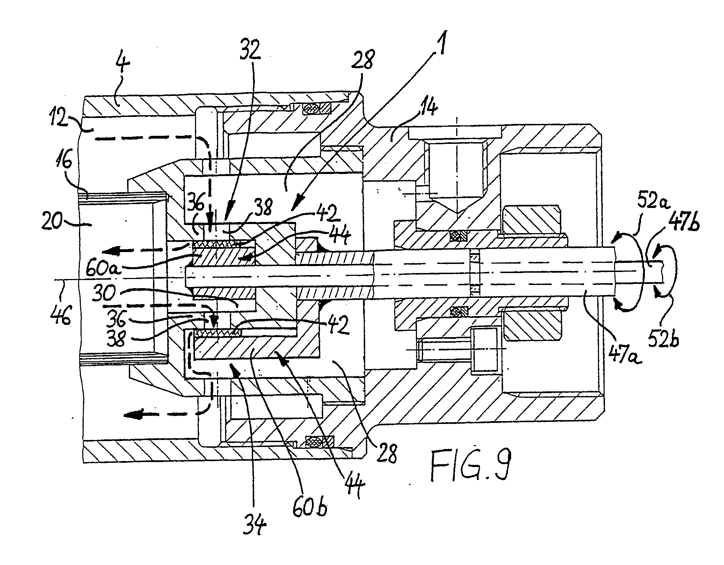

Im Ausführungsbeispiel nach Fig. 6 bis 8 sind die beiden Dämpfungsventile 32, 34 der Dämpfungsventil-Anordnung 1 erfindungsgemäß mit Radialströmung ausgebildet. Hierzu ist die Trennwand 36 zwischen der ersten Ventilkammer 28 und der zweiten Ventilkammer 30 als Hohlzylinderwandung ausgebildet, durch die hindurch sich die Drosselkanäle 38 in radialer Richtung erstrekken (siehe insbesondere Fig. 7 und 8). Hierbei sind für jedes der Dämpfungsventile 32, 34 zwei in axialer Richtung zueinander versetzte Reihen von umfänglich verteilt angeordneten Drosselkanälen 38 vorgesehen. Auch hier werden wiederum alle Drosselkanäle 38 jedes Dämpfungsventils 32, 34 von dem Blattfederelement 42 auf der Seite der Austrittsmündungen 40 abgedeckt, wozu jedes Blattfederelement 42 erfindungsgemäß eine in Anpassung an den Durchmesser bzw. die Krümmung der Trennwand 36 kreisförmig bzw. hohlzylindrisch gebogene Krümmung derart aufweist, daß es über seine gesamte Längserstreckung hinweg mit einer bestimmten Vorspannung auf der Trennwand 36 aufliegt. Die hohlzylindrische Trennwand 36 erstreckt sich ausgehend von einem das Innenrohr 16 haltenden Abschnitt des Kopfteils 14 in axialer Richtung von dem Innenrohr 16 weg und besitzt auf seiner dem Innenrohr 16 abgekehrten Seite eine stirnseitige, ringförmige Endfläche 56. Die mit der Welle 47 verbundenen Andruckelemente 44 sind in diesem Fall als sich ausgehend von einer mit der Welle 47 verbundenen, senkrecht zur Längsachse 46 angeordneten, vorzugsweise dichtend an der Endfläche 56 der hohlzylindrischen Trennwand 36 anliegenden Platte 58 axial in Richtung der Dämpfungsventile 32, 34 bzw. des Innenrohrs 16 erstreckende Andruckstücke 60a, 60b ausgebildet, wobei sich das Andruckstück 60a des Einfederungs-Dämpfungsventils 32 in das Innere der hohlzylindrischen Trennwand 36 erstreckt und hier mit seiner radial nach außen weisenden, an die Krümmung des Blattfederelementes 42 angepaßten Oberfläche an dem Blattfederelement 42 anliegt und dieses so in radialer Richtung zwischen sich und der Trennwand 36 einspannt. Das Andruckstück 60b des Ausfederungs-Dämpfungsventils 34 erstreckt sich demgegenüber auf der Außenseite der hohlzylindrischen Trennwand axial bis über das entsprechende Blattfederelement 42 und besitzt ebenfalls eine an die Krümmung dieses Blattfederelementes 42 angepaßte, radial nach innen weisende Oberfläche, zwischen der und der Trennwand 36 das Blattfederelement 42 eingespannt ist. Aus Fig. 6 wird deutlich, daß die beiden Dämpfungsventile 32, 34, d.h. die entsprechenden Drosselkanäle 38 und die zugeordneten Blattfederelemente 42, in axialer Richtung zueinander versetzt angeordnet sind. Hierdurch ist im dargestellten Beispiel das Andruckstück 60a axial länger ausgebildet als das andere Andruckstück 60b. Der Versatz der Dämpfungsventile 32, 34 kann jedoch ebenfalls umgekehrt vorgesehen werden. In diesem Beispiel sind die Blattfederelemente 42 jeweils einendig über Nieten 62 an der Trennwand 36 befestigt. Auch hier erfolgt wiederum die Dämpfungseinstellung durch Verdrehen der Welle 47, wodurch sich die Andruckstücke 60a, 60b jeweils über die Längserstreckung der Blattfederelemente 42 hinweg bewegen, so daß sich deren Einspannlänge und damit auch die Federkraft verändert.

Bei den Ausführungsbeispielen nach Fig. 3 bis 5 sowie Fig. 6 bis 8 sind jeweils die Andruckelemente 44 beider Dämpfungsventile 32, 34 gemeinsam mit der gleichen Welle 47 verbunden, so daß hier eine gleichzeitige Einstellung von Ein- sowie Ausfederungsdämpfung möglich ist.

Demgegenüber ist in Fig. 9 ein Ausführungsbeispiel dargestellt, bei dem erfindungsgemäß die beiden Dämpfungsventile 32, 34 der Dämpfungsventil-Anordnung 1 unabhängig voneinander eingestellt werden können. Hierzu sind - wieder in einer Radialströmungs-Version ähnlich Fig. 6 bis 8 - die Andruckelemente 44 jeweils mit einer eigenen Teilwelle 47a, 47b verbunden. Dabei ist die eine Teilwelle 47a hohlzylindrisch ausgebildet, und die andere Teilwelle 47b erstreckt sich axial durch die hohlzylindrische Teilwelle 47a hindurch. Hierdurch erfolgt eine Einstellung des Einfederungs-Dämpfungsventils 32 über Drehung der inneren Welle 47b in Doppelpfeilrichtung 52b und eine Einstellung des Ausfederungs-Dämpfungsventils 34 durch Drehung der äußeren Teilwelle 47a in Doppelpfeilrichtung 52a. Die Drosselkanäle 38 der beiden einzelnen Dämpfungsventile 32, 34 sind bei dieser Ausführung in Umfangsrichtung der Trennwand 36 versetzt angeordnet. Im übrigen entspricht die Ausführung nach Fig. 9 - mit geringfügigen Unterschieden - derjenigen der Fig. 6 bis 8, wobei gleiche Teile mit den gleichen Bezugsziffern bezeichnet sind. Selbstverständlich kann auch die Axialströmungs-Version nach Fig. 3 bis 5 analog zu Fig. 9 mit unabhängig voneinander einstellbaren Dämpfungsventilen 32, 34 ausgebildet werden.

Die Erfindung ist nicht auf die dargestellten und beschriebenen Ausführungsbeispiele beschränkt, sondern umfaßt auch alle im Sinne der Erfindung gleichwirkenden Ausführungsformen.

## Ansprüche

1. Dämpfungsventil für insbesondere hydraulische Medien in Dämpfungssystemen, wie Stoß- und Schwingungsdämpfungs-Systemen und dergleichen, mit mindestens einem zur Dämpfungseinstellung mit einem Ventilelement ausgestatteten Drosselkanal,
**dadurch gekennzeichnet,** daß das Ventilelement als den Drosselkanal (38) an seiner Austrittsmündung (40) für das Medium zumindest teilweise abdeckendes, einendig eingespanntesßlattfederelement (42) ausgebildet ist, wobei die Dämpfungseinstellung durch Variation der freien Blattlänge (1) des Blattfederelementes (42) erfolgt.

2. Dämpfungsventil nach Anspruch 1,
**dadurch gekennzeichnet,** daß die Blattlänge (1) des Blattfederelementes (42) zwischen einem maximalen Wert und, bezogen auf den Drosselkanal (38), einer Länge gleich Null insbesondere stufenlos veränderbar ist.

3. Dämpfungsventil nach Anspruch 1 oder 2,
**dadurch gekennzeichnet,** daß sich durch eine eine erste Ventilkammer (28) von einer zweiten Ventilkammer (30) trennende Trennwand (36) vorzugsweise mehrere gemeinsam von dem Blattfederelement (42) abgedeckte Drosselkanäle (38) erstrecken.

4. Dämpfungsventil nach Anspruch 3,
**gekennzeichnet durch** ein zur Variation der freien Blattlänge (1) des einendig an der Trennwand (36) befestigten Blattfederelementes (42) über dieses hinweg beweglich geführtes Andruckelement (44), wobei das Blattfederelement (42) bereichsweise zwischen dem Andruckelement (44) und der Trennwand (36) eingespannt ist.

5. Dämpfungsventil nach Anspruch 3 oder 4,
**dadurch gekennzeichnet,** 1 daß die Trennwand (36) eben ausgebildet ist und die Drosselkanäle (38) axial, parallel zueinander sowie auf einem Kreisbogen verteilt angeordnet sind, wobei das Blattfederelement (42) als ebene, radial geschlitzte, die Drosselkanäle (38) überdeckende Kreisringscheibe ausgebildet ist, und wobei das Andruckelement (44) als in radialer Anordnung an einer zu der Trennwand (36) senkrechten, drehbar gelagerten Welle (47) befestigtes, mittels der Welle (47) über das kreisringförmige Blattfederelement (42) hinweg verschwenkbares Andruckstück (48) ausgebildet ist.

6. Dämpfungsventil nach Anspruch 5,
**dadurch gekennzeichnet,** daß zwischen dem Andruckelement (44) und dem Blattfederelement (42) ein Druckausgleich derart geschaffen ist, daß der Druck des insbesondere hydraulischen Mediums auf beiden Seiten des Andruckelementes (44) gleich ist.

7. Dämpfungsventil nach Anspruch 3 oder 4,
**dadurch gekennzeichnet,** 1 daß die Trennwand (36) als Hohlzylinderwandung ausgebildet ist und die Drosselkanäle (38) radial, über den Umfang der hohlzylindrischen Trennwand (36) verteilt angeordnet sind, wobei das die Drosselkanäle (38) überdeckende Blattfederelement (42) etwa hohlzylindrisch gekrümmt ausgebildet ist, und wobei das Andruckelement (44) als in radialer Anordnung an einer zu der hohlzylindrischen Trennwand (36) koaxialen, drehbar gelagerten Welle (47) befestigtes, sich in axialer Richtung bis über den Bereich des Blattfederelementes (42) erstreckendes und mit einer an die Krümmung des Blattfederelementes (42) angepaßten Oberfläche an dem Blattfederelement (42) anliegendes Andruckstück (60a, 60b) ausgebildet ist.

8. Dämpfungsventil nach einem oder mehreren der Ansprüche 3 bis 7,
**dadurch gekennzeichnet,** daß das Blattfederelement (42) im Bereich seiner freien Blattlänge (1) mit einer elastischen Vorspannung auf der Trennwand (36) aufliegt.

9. Dämpfungsventil nach einem oder mehreren der Ansprüche 1 bis 8,
**dadurch gekennzeichnet,** daß das Blattfederelement (42) mehrschichtig aus mindestens zwei aufeinanderliegenden Einzelblattfedern gebildet ist.

10. Dämpfungsventil-Anordnung für insbesondere hydraulische Medien in Dämpfersystemen,
**gekennzeichnet durch** zwei bezüglich der Strömungsrichtung des die Drosselkanäle (38) durchströmenden Mediums gegensinnig gerichtete Dämpfungsventile (32, 34) nach einem oder mehreren der Ansprüche 1 bis 9.

11. Dämpfungsventil-Anordnung nach Anspruch 10,
**dadurch gekennzeichnet,** daß die Dämpfungsventile (32, 34) gemeinsam und/oder unabhängig voneinander verstellbar sind.

12. Dämpfungsventil-Anordnung nach Anspruch 10 oder 11,
**dadurch gekennzeichnet,** daß die beiden Dämpfungsventile (32, 34) eine gemeinsame erste Ventilkammer (28), eine gemeinsame zweite Ventilkammer (30) sowie eine gemeinsame, die Ventilkammern (28, 30) trennende Trennwand (36) aufweisen, wobei sich durch die Trennwand (36) für jedes Dämpfungsventil (32, 34) vorzugsweise eine Reihe von mehreren Drosselkanälen (38) erstreckt, die beiden Reihen der Drosselkanäle (38) auf verschiedenen Seiten der Trennwand (36) von jeweils einem Blattfederelement (42) abgedeckt sind und die Blattfederelemente (42) zusammen mit den zugeordneten Drosselkanälen (48) in axialer und/oder umfänglicher Richtung zueinander versetzt angeordnet sind.

FIG.1

FIG.2

EP 0 411 337 A1

FIG. 3

FIG. 4

FIG. 5

FIG. 6

FIG. 7

FIG. 8

FIG.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | GB-A-2 170 572 (DAIMLER-BENZ AG) <br> * Anspruch 1; Figuren 1, 4 * <br> - - - | 1,2,3-5, 9-12 | F 16 F 9/34 <br> F 16 F 9/44 |
| X,A | GB-A-1 150 394 (C.U. PEDDINGHAUS) <br> * Ansprüche 1, 4, 6, 10; Figuren 1, 2 * <br> - - - | 1,2,9-11 | |
| X,A | DE-A-1 817 392 (L.F. SCHMID) <br> * Anspruch 1; Figuren 1-3 * <br> - - - | 1,2-5 | |
| A | DE-B-1 270 426 (DAIMLER-BENZ AG) <br> * Figur * <br> - - - | 1,2 | |
| A | PATENT ABSTRACTS OF JAPAN vol. 9, no. 63 (M-365)(1786) 20 März 1985, <br> & JP-A-59 197639 (TOKICO LTD) 09 November 1984, <br> * das ganze Dokument * <br> - - - | 1,2 | |
| A | DE-U-7 104 268 (H. FUSSANGEL) <br> * Anspruch 1; Figuren 1-3, 5-9 * <br> - - - | 1,2 | |
| A | DE-A-3 522 105 (TOKICO LTD) <br> * Figuren 1-6 * <br> - - - | 1,3,7, 9-12 | RECHERCHIERTE SACHGEBIETE (Int. Cl.5) |
| A | DE-U-8 026 458 (WITZENMANN GMBH) <br> * Anspruch 1; Figuren 1, 2 * <br> - - - | 1,3,5, 9-11 | F 16 F <br> B 60 G |
| A | DE-A-1 817 318 (FICHTEL & SACHS AG) <br> * Figuren 3, 4, 6 * <br> - - - - - | 1,2 | |

Der vorliegende Recherchenbericht wurde für alle Patentansprüche erstellt

| Recherchenort | Abschlußdatum der Recherche | Prüfer |
|---|---|---|
| Den Haag | 14 November 90 | TSITSILONIS L. |